Europäisches Patentamt

European Patent Office

Office européen des brevets

(11) Veröffentlichungsnummer: **0 142 687**

**B1**

# EUROPÄISCHE PATENTSCHRIFT

(45) Veröffentlichungstag der Patentschrift:
02.08.89

(51) Int. Cl.⁴: **B 65 G 45/02**

(21) Anmeldenummer: 84111889.6

(22) Anmeldetag: 04.10.84

(54) **Vorrichtung zum Schmieren einer Kette.**

(30) Priorität: 18.11.83 DE 3341658

(43) Veröffentlichungstag der Anmeldung:
29.05.85 Patentblatt 85/22

(45) Bekanntmachung des Hinweises auf die Patenterteilung:
02.08.89 Patentblatt 89/31

(84) Benannte Vertragsstaaten:
AT BE CH FR GB IT LI LU NL SE

(56) Entgegenhaltungen:
EP-A-0 063 446
GB-A-592 386
US-A-4 085 821

J. FAISANDIER ET AL: Mécanismes hydrauliques,
Paris 1980, Seiten 56-66

(73) Patentinhaber: GerroKaiser Dosenwerk GmbH &
Co KG, Hellbachstrasse Postfach 20 03 20, D-4350
Recklinghausen (DE)

(72) Erfinder: **Jendick, Manfred, Westfalenstrasse 166,
D-4350 Recklinghausen (DE)**

(74) Vertreter: **König, Reimar, Dr.- Ing., Patentanwälte
Dr.- Ing. Reimar König Dipl.- Ing. Klaus Bergen
Wilhelm- Tell- Strasse 14 Postfach 260162, D-4000
Düsseldorf 1 (DE)**

**Beschreibung**

Die Erfindung betrifft eine Vorrichtung zum schußweisen Aufbringen von flüssigem Schmiermittel auf eine über ein Antriebsrad geführte, schnellaufende Kette mit zumindest einer gegen die Kette gerichteten Schmiermittel-Austrittsdüse, der mittels zumindest einer nockenbetätigten Schmiermittelkolbenpumpe Schmiermittel zugeführt wird, wobei jeder Schmiermittel-Abgabestelle je eine feststehende Schmiermittelkolbenpumpe zugeordnet ist, mit einem oder mehreren Ansteuernocken, die von einer gemeinsamen, axial beweglichen und mit einer Antriebswelle kuppelbaren Kupplungswelle getragen werden und einem Sensor, der ein das An- und Entkuppeln der Welle und Schmieren der Kette bewirkendes Signal abgibt.

Eine Schmiervorrichtung dieser Art ist aus der US-A-4 085 821 bekannt. Das Schmieren einer Kette wird dort durch einen Kontaktarm ausgelöst, der von den Gelenkbolzen der umlaufenden Kette niedergedrückt wird und einen signalauslösenden Schalter betätigt. Durch das Signal wird ein Vorgang zum Einrücken einer Kupplung bewirkt, die eine Motorwelle mit einer Pumpenwelle verbindet. Die Pumpenwelle weist Exzenter auf, von denen beim Drehen der Welle ein jeder einen Kolben gegen die Kraft einer Rückstellfeder in einer Schmiermittelpumpe nach oben bewegt, wobei die in der Pumpe befindliche Schmiermittelmenge über eine Leitung der Schmiermittel-Abgabestelle zugeführt wird. Die Schmiervorrichtung läßt sich allerdings nur für sehr langsam laufende Ketten einsetzen, da sich der die Pumpenwelle antreibende Elektromotor nicht wie erforderlich mit dem Lauf der Kette synchronisieren und auch nicht an sich laufend ändernde Kettengeschwindigkeiten anpassen läßt, so daß ein gezieltes Auftragen einer begrenzten Schmiermittelmenge auf eine bestimmte Schmierstelle nicht möglich ist.

Außerdem ist durch die EP-A-63 446 eine Vorrichtung zum Schmieren von Ketten bekanntgeworden, bei der die Schmieraggregate samt Tank auf einer drehenden Scheibe bzw. einem drehenden Rad angeordnet sind. Derartige Schmiervorrichtungen sind allerdings zum Schmieren einer großen Anzahl von Schmierstellen mit kleinsten Schmiermittelmengen völlig ungeeignet, denn die Schmieraggregate unterliegen sehr großen Rotationskräften. Das führt insbesondere bei hohen Kettengeschwindigkeiten zu einem unkontrollierten Leerlaufen der Schmierölwege und der Auftragdüsen. Es kann sich deshalb im Zuführsystem zu den Düsen der Schmieraggregate keine druckstabile Ölsäule ausbilden, die aber zwingend erforderlich ist und es erst erlaubt, auf kleinste Hydraulikkolbenhübe in schneller Folge reagieren zu können.

Der Erfindung liegt die Aufgabe zugrunde, die vorstehenden Nachteile zu vermeiden und eine Schmiervorrichtung zu schaffen, die es insbesondere ermöglicht, bis zu 10 000 Schmierstellen (Kettenbolzen) pro Minute so zu schmieren, daß bei erheblich vermindertem Ölverbrauch die Kettenglieder nur im Bereich des Kettenbolzens zwischen den Laschen an jeder Bolzenseite die gleiche Schmiermittelmenge erhalten, deren geringe Menge sich auch bei hohen Kettengeschwindigkeiten auf eine möglichst große Fläche des Kettenbolzens verteilen läßt.

Diese Aufgabe wird erfindungsgemäß dadurch gelöst, daß die Antriebswelle über das vom Ketten-Antriebsrad abgenommene Drehmoment angetrieben und zwangssynchronisiert ist, daß alle Schmiermittelkolbenpumpen um die Antriebswelle herum und in einer Radialebene angeordnet sind, in der auch die Ansteuernocken auf dem Umfang der Antriebswelle positioniert sind, daß jede Schmiermittelkolbenpumpe ein federbelastetes Rückschlagventil in der Ansaug- und Hochdruckleitung aufweist, das in der Ansaugleitung gegen einen Vordruck in dieser Leitung schließt und mit einem eine den Spritzbeginn und das Spritzende an der Schmiermittel-Abgabestelle festlegenden Anlaufschräge aufweisenden Umlenknocken versehen ist, dem wenigstens einer der mit derselben Geschwindigkeit wie die Kettengeschwindigkeit rotierender Ansteuernocken der über die Kupplung der Antriebswelle mit dem Kettenrad der Kette gekuppelten Kupplungswelle im Verlaufe des Drehens gegenüberliegt, daß der dem antreibenden Kettenrad zugeordnete Sensor die Anzahl der über das Kettenrad laufenden Schmiermittel-Abgabestellen feststellt und diese als Zählimpulse an ein die Anzahl der vorhandenen Schmiermittel-Abgabestellen enthaltenes Schmier- bzw. Pausenzählwerk weiterleitet, das nach dem Herunterzählen der eingegebenen Anzahl Schmiermittel-Abgabestellen bis auf Null die Impulse für das Schmierzählwerk freigibt und gleichzeitig das Ankuppeln der Wellen veranlaßt, und daß das Schmierzählwerk nach dem Herunterzählen der eingegebenen Anzahl Schmiermittel-Abgabestellen bis auf Null schließlich das Entkuppeln der Wellen veranlaßt.

Insbesondere zum Schmieren schnellaufender Ketten läßt sich damit einerseits ein schnelles Auffüllen der Arbeitszylinder der Schmiermittelkolbenpumpen mit einer stets gleichen Schmiermittelmenge erreichen und andererseits die Ölauftragmenge pro Spritzhub bei allen Kettengeschwindigkeiten konstant halten, während sich die Auftragzeit pro Spritzhub gleichmäßig mit der Kettengeschwindigkeit ändert, weil die Nockenbetätigung der Pumpen zeitlich im wesentlichen gleich zur Kettenbewegung abläuft. Damit wird vermieden, daß die ausgespritzte bzw. zugeführte Ölmenge bei langsamer Kettengeschwindigkeit schlagartig auf die Schmierstellen des Bolzens gelangt und dort einen Tropfen bildet. Hingegen verteilt sich die nur geringe verfügbare Ölmenge von 0,007 cm³ Bis 0,014 cm³ pro Spritzhub auf eine große Fläche des Kettenbolzens, was für das Haftvermögen des Öles auf der Kette besonders wichtig ist und sich auch bei hohen Kettengeschwindigkeiten erreichen läßt.

Insbesondere das Rückschlagventil in der Hochdruckleitung verschließt sofort nach dem Arbeitstakt des Pumpenkolbens die Hochdruckseite, was ein Nachströmen des Schmieröls sicher verhindert. Beim Rückhub des Pumpenkolbens durch die Rückholfeder entsteht mit dem Verschließen der Hochdruckseite gleichzeitig ein Unterdruck, der das Rückschlagventil in der Ansaugleitung öffnet, wodurch sich der Zylinderraum wieder mit Schmieröl füllt.

Mittels des Sensors und des Schmier- bzw. Pausenzählwerks läßt sich ein automatischer Betrieb der Kettenschmierung erreichen, bei dem das Schmierzählwerk das Ent- und das Pausenzählwerk das Ankuppeln der Antriebswelle mit der Kupplungswelle veranlaßt.

Um sicherzustellen, daß alle Schmierstellen der Kette Öl erhalten, was allerdings je Umlauf nur einmal geschehen soll, erhalten die beiden Zählwerke über den Sensor die Impulse und damit die genaue Anzahl der vorbeifahrenden Schmierstellen. Der Schmierstellenzähler enthält die Anzahl der während eines Schmierzyklus zu schmierenden Schmierstellen, und der Pausenzähler enthält die Anzahl der während einer Pause nicht zu zählenden Schmierstellen. Die Zähler sind so geschaltet, daß beim Runterzählen des Schmierstellenzählers vom eingegebenen Wert bis auf Null der Pausenzähler keine Impulse erhält. Bei Erreichen von Null kuppelt die Betätigungsvorrichtung die Kettenschmierung aus, und die Impulse des Sensors gelangen nun auf den Pausenzähler, der von seinem eingestellten Wert nun ebenfalls bis auf Null heruntergezählt wird. Danach beginnt der Zyklus wieder von Neuem. Auf diese Weise arbeitet die Kettenschmierung nicht zeitabhängig, sondern gesteuert von den effektiven Umläufen der zu schmierenden Kette.

Vorzugsweise weist die Schmiervorrichtung zehn auf einem Halbkreis mit Abstand nebeneinanderliegende Schmiermittelkolbenpumpen mit je einem eine Anlaufschräge aufweisenden Umlenknocken sowie zwei mit derselben Geschwindigkeit wie die Kettengeschwindigkeit rotierende und auf der Kupplungswelle derart befestigte Ansteuernocken auf, daß im Verlaufe des Drehens jeweils der eine Ansteuernocken dem Umlenknocken der ersten und der andere Ansteuernocken dem Umlenknocken der letzten Schmiermittelkolbenpumpe gegenüberliegt.

Es eignen sich beispielsweise auch die folgenden Anordnungen: vier Nocken und fünf Pumpen; ein Nocken und zwanzig Pumpen; zwanzig Nocken und eine Pumpe. Hochdruckschmiermittelkolbenpumpen erlauben sehr hohe Taktfolgen, die aber beispielsweise ab einer Taktrate von 4000 Schmierimpulsen pro Minute einen Schmierölvordruck von 2 bar in den Ansaugleitungen benötigen. Die hohen Taktfolgen führen naturgemäß zu einem erhöhten mechanischen Verschleiß und zu einer minderen Schmierqualität. Durch den Einsatz von zehn nacheinander angesteuerten Hochdruckschmierkolbenpumpen lassen sich leicht 10.000 Schmierimpulse pro Minute mit nur 1.000 Takten pro Minute einer einzelnen Einheit realisieren. Das Hydrauliksystem unterliegt keinerlei Rotationskräften. Die von dem Kettenrad abgenommene Kettengeschwindigkeit wird während der Schmierphase auf den mit der Kupplungswelle befestigten Ansteuernocken übertragen, der beim Auftreffen auf die Anlaufschräge des Umlenknockens einer Schmiermittelpumpe aus der Rotationsbewegung eine lineare Bewegung des Schmierpumpenkolbens erzeugt. Die Breite sowie die Schräge des Umlenknockens legen den Spritzanfang und das Spritzende genau fest, weil nur bei dem vom Ansteuernocken verursachten Bewegen des Pumpenkolbens in Richtung zum Pumpenkopf Schmieröl aus den Ölauftragsdüsen austritt und zu den Schmierstellen gelangt. Die rotierenden Ansteuernocken sorgen für ein Synchronisieren der Hochdruckschmiermittelkolbenpumpen untereinander sowie der zu schmierenden Stellen und ermöglichen darüber hinaus ein Festlegen des Arbeitshubes des Pumpenkolbens und damit der geförderten Ölmenge, da sie sich in ihrer Lage verstellen lassen. Je nachdem, ob der Umlaufdurchmesser der Ansteuernocken vergrößert oder verkleinert wird, ändert sich entsprechend der Kolbenhub und die Ölmenge.

Die Umlenknocken der Schmiermittelpumpen greifen in einen Führungsring ein, der diese zum einen in Rotationsrichtung abstützt und zum anderen den Rückhub der Umlenknocken exakt begrenzt, der durch eine den Pumpenkolben zurückstellende Rückholfeder dann einsetzt, wenn der rotierende Ansteuernocken die Anlaufschräge des Umlenknockens nicht mehr berührt. Unter der Kraft der Rückholfeder legt sich ein Umlenknocken mit seiner Anschlagfläche gegen den Führungsring, woraus eine immer gleiche Ausgangslage und damit eine gleichbleibende Ölauftragsmenge resultiert. Die die Pumpenkolben über die Umlenknocken beaufschlagenden Ansteuernocken befinden sich in einer auf der Kupplungswelle aufgekeilten Führungshülse.

Das Kuppeln der Kupplungswelle vorzugsweise mit dem angetriebenen Kettenrad der umlaufenden Gliederkette und damit das Abnehmen und Weiterleiten der Kettengeschwindigkeit an die mit der Kupplungswelle rotierenden Ansteuernocken, erfolgt nach einem Vorschlag der Erfindung durch ein mit dem Kettenrad verbundenes Winkelgetriebe, das ausgangsseitig einer als Wellenzapfen ausgebildete Antriebswelle mit einer aufgekeilten Kupplungshälfte einer zweiteiligen Klauenkupplung trägt, die in die andere, fest mit der Kuppelwelle verbundene ausrückbare zweite Kupplungshälfte eingreift. Die Klauenkupplung ermöglicht das Trennen der im wesentlichen von der Kupplungswelle getragenen Schmieraggregate während der Schmierpausen, so daß die über das Winkelgetriebe mit der Geschwindigkeit des Kettenrades umlaufende Antriebswelle in diesem Fall leerläuft und sich auf die Schmieraggregate während dieser Zeit keine Bewegung mehr überträgt.

Das Ausrücken der Kuppelwelle mit der zweiten Kupplungshälfte kann über eine an dem der Klauenkupplung entgegengesetzten Ende der Kupplungswelle angeordnete Mitnehmerhülse erfolgen, die eine Ausnehmung besitzt, in die ein Mitnehmerbügel einer Betätigungsvorrichtung eingreift. Als Betätigungsvorrichtung eignet sich je nach Ausführung beispielsweise ein Handhebel, ein pneumatischer bzw. hydraulischer Stellzylinder oder auch ein elektrisch ansteuerbarer Hubmagnet.

Die Schmiervorrichtung läßt sich durch ein die Kupplungswelle mit der Führungshülse aufnehmendes, zwischen einem Lagerflansch angeordnetes Lager über eine Zentrierplatte, Abstandshalter, eine Pumpenträgerscheibe und eine Grundplatte fest mit dem Winkelgetriebe verbinden.

Von einem Pumpenkopf der einzelnen Schmierpumpen bzw. Hochdruckschmiermittelkolbenpumpen bis zu einem horizontalen Düsenhalter oberhalb der Kette verlaufende Rohrleitungen sind in einer Reihe mit Abstand voneinander in dem Düsenhalter angeordnet und gehen darunter in je ein Ölverteilerrohr mit halbiertem Rohrleitungsquerschnitt und je einer Ölauftragsdüse links und rechts der Kette über. Die durch den Arbeitshub des Pumpenkolbens festgelegte Ölmenge gelangt über den Pumpenkopf einer jeden Hochdruckschmiermittelkolbenpumpe und den davon abgehenden Hydraulikrohren bis zum Ölverteilerrohr. Das Halbieren des Rohrleitungsquerschnittes führt zu einer genauen Ölverteilung für beide Ölauftragsdüsen, die somit beide eine gleiche Ölmenge an die Schmierstellen abgeben.

Das gezielte Auftragen des Schmieröles auf die Kettenlaschen der Bolzenabschnitte verbessern Kettenführungen im Bereich der Ölauftragsdüsen, die die Kette zwangsführen. Das optimale Ausnutzen der vorhandenen Ölmenge durch ein genaues Auftragen nur an den zu schmierenden Stellen erlaubt es, die Schmierpausen um ein Vielfaches zu verlängern.

Eine Eigenschmierung und damit eine erhöhte Standzeit der Schmiervorrichtung läßt sich erreichen, wenn ein mit Öl gefülltes Gehäuse die gesamte Schmiervorrichtung, insbesondere deren beweglichen Teile aufnimmt.

Die Erfindung wird nachfolgend anhand eines in der Zeichnung dargestellten Ausführungsbeispiels des näheren erläutert. In der Zeichnung zeigen:

Fig. 1 ein Blockschema der erfindungsgemäßen Kettenschmierung;

Fig. 2 eine Gesamtansicht einer Kettenschmierung, teilweise geschnitten;

Fig. 3 einen Schnitt durch eine Kettenschmierung gemäß Fig. 2 entlang der Linie II-II;

Fig. 4 einen Schnitt durch eine Kettenschmierung gemäß Fig. 2 entlang der Linie III-III sowie

Fig. 5 ein Blockdiagramm einer automatischen Kettenschmierung.

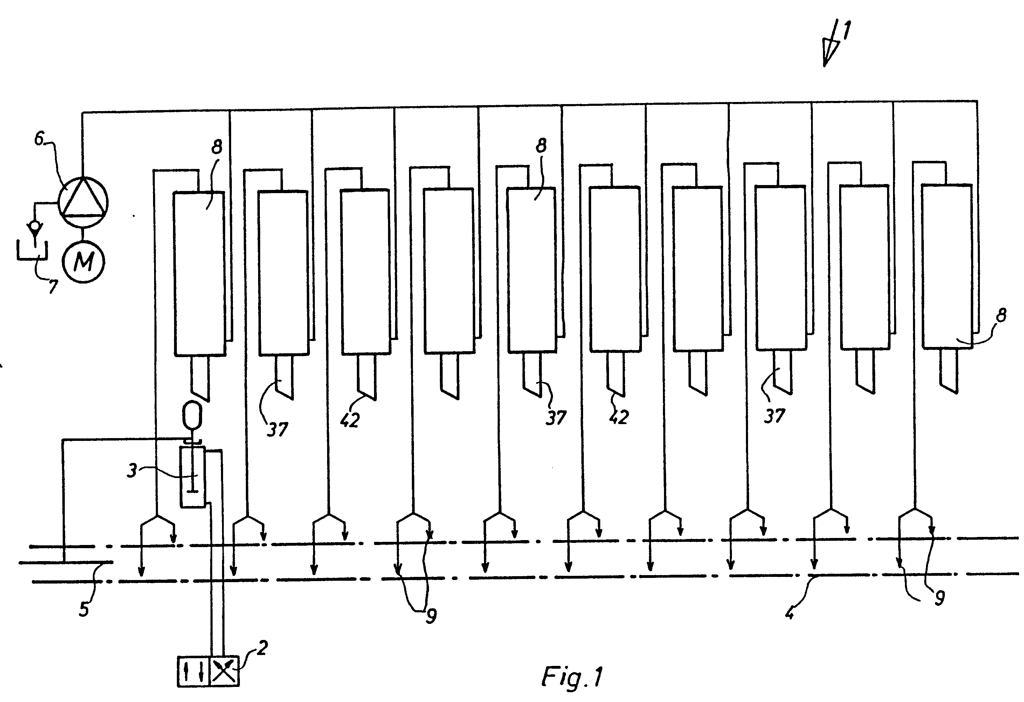

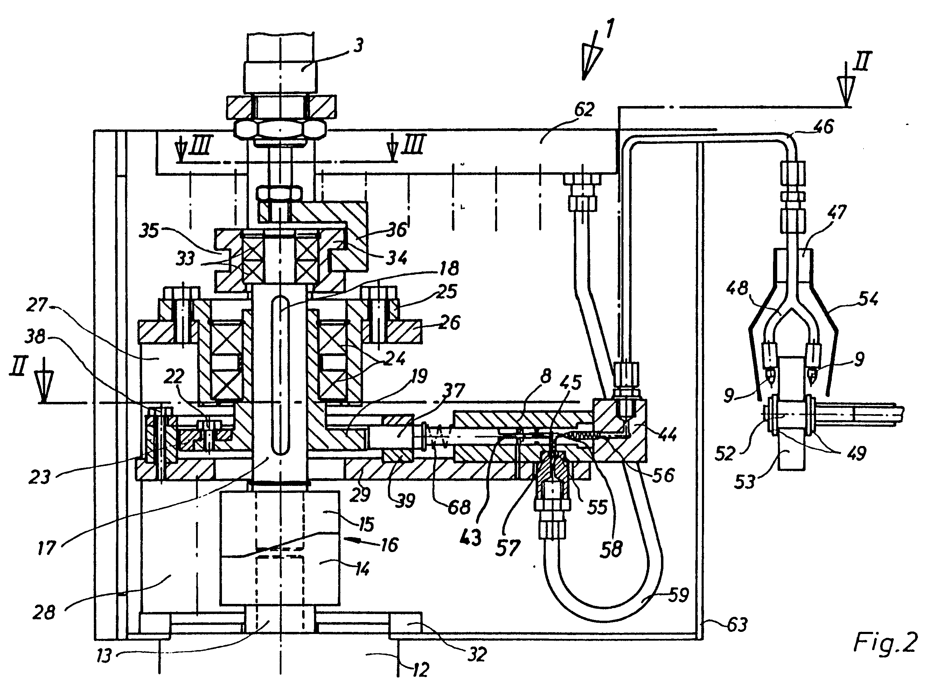

Die insgesamt mit 1 bezeichnete Kettenschmierung läßt sich gem. Fig. 1 über ein Mehrwegeventil 2 ansteuern, worauf eine Betätigungsvorrichtung 3 (vgl. Fig. 2) abhängig von der Geschwindigkeit der stetig umlaufenden Kette 4 über das Antriebskettenrad 5 die Ölversorgung auslöst. Darauf fördert ein Hydraulikmotor 6 aus einem Ölbehälter 7 Schmieröl zu den einzelnen Hochdruckpumpen 8, die sich nockenbetätigt nacheinander ansteuern lassen und mittels der Ölauftragsdüsen 9 die gewünschte Schmiermittelmenge an die Schmierstellen der Kette 4 abgeben, wie nachfolgend noch näher erläutert werden wird.

Das Synchronisieren des Spritzhubes erfolgt über die zu schmierende Kette 4 bzw. deren Kettenrad 5, das über nicht dargestellte Zahnriemen und ein Winkelgetriebe 12 mit der Kettenschmierung 1 verbunden ist. Das Winkelgetriebe 12 besitzt dazu ausgangsseitig einen Wellenzapfen 13 mit einer aufgekeilten Kupplungshälfte 14, die in die zweite, von der ausdrückbaren Kuppelwelle 17 getragene Kupplungshälfte 15 eingreift. Die beiden Kupplungshälften 14, 15 bilden eine Klauenkupplung 16.

Zwei Keile 18 sichern auf einer Kupplungswelle 17 eine Nockenträgerführungshülse 19, die zwei in ihr mittels Bolzen 22 verstellbar gelagerte Ansteuernocken 23 aufnimmt. Ein Lager 24 fixiert und schließt die Führungshülse 19 ein, das sich seinerseits in einem Lagerflansch 25 befindet, der über eine Zentrierplatte 26, Abstandshalter 27, 28, eine Pumpenträgerscheibe 29 sowie eine Grundplatte 32 mit dem Winkelgetriebe 12 verbunden ist.

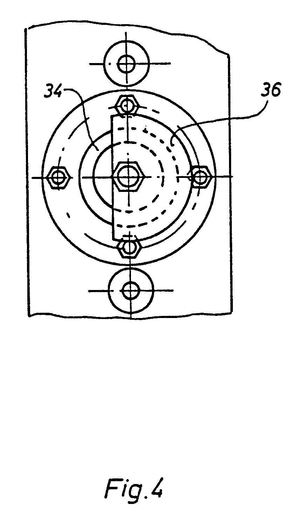

An dem der Klauenkupplung 16 entgegengesetzten Ende der Kupplungswelle 17 trägt ein Lager 33 eine Mitnehmerhülse 34 mit einer nutenartigen Ausnehmung 35, in die die Betätigungsvorrichtung 3 mittels eines Mitnehmerbügels 36 eingreift (vgl. Fig. 4) und die Kuppelwelle 17 zum Inbetriebsetzen der Schmierung mit dem Wellenzapfen 13 verbindet bzw. während der Schmierpausen von diesem trennt.

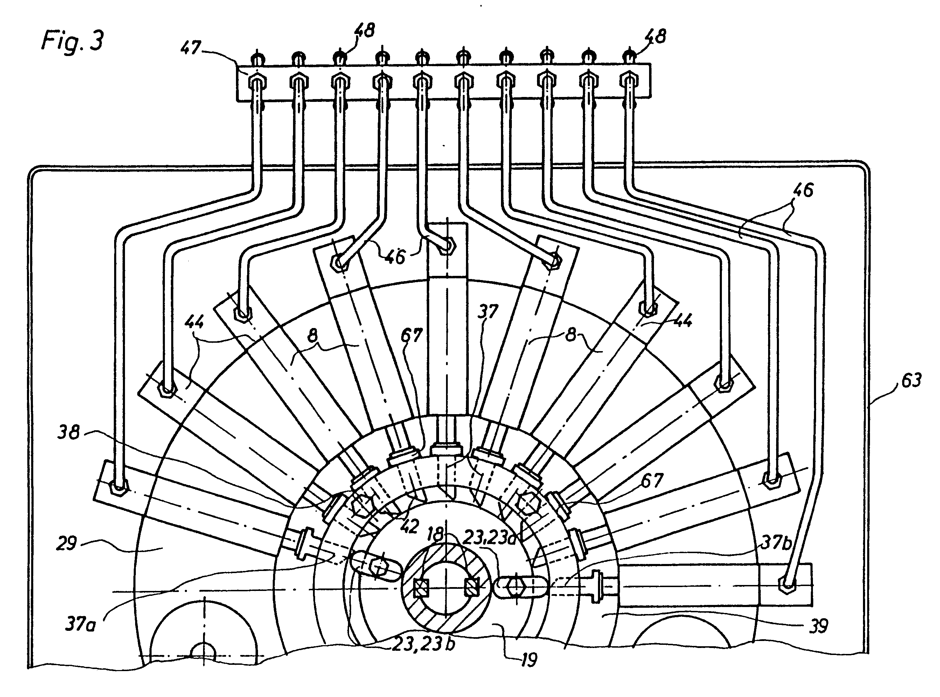

Bei zum Schmieren der umlaufenden Kette 4 eingerasteter Kupplungswelle 16 gelangen die mit der Kupplungswelle 17 über die Führungshülse 19 umlaufenden Ansteuernocken 23 nacheinander in Kontakt mit Umlenknocken 37 der Hochdruckpumpen 8, die auf einem Halbbogen der Pumpenträgerscheibe 29 mit Abstand voneinander festgelegt sind (Fig. 3). Die Umlenknocken 37 greifen in Ausnehmungen eines mittels Bolzen 38 auf der Pumpenträgerscheibe 29 festgelegten Führungsringes 39 ein, aus dem sie mit Anlaufschrägen 42 herausragen. Im Verlaufe des Drehens treffen die Ansteuernocken 23 auf die Anlaufschrägen 42 und setzen die Drehbewegung in eine lineare Bewegung für die Pumpenkolben 43 um, so daß sich ein jeder Pumpenkolben 43 in Richtung zum Pumpenkopf 44 bewegt und das im Druckraum 45 enthaltene Öl über die Rohrleitungen 46 bis zu den Ölauftragsdüsen 9 führt. Ein im Schmierbereich oberhalb der Kette 4 angeordneter Düsenhalter 47 sichert die Lage der Rohrleitungen 46, die unterhalb des Düsenhalters 47 in je ein Ölverteilerrohr 48 mit halbiertem Rohrleitungsquerschnitt übergehen, an deren Enden sich die Ölauftragsdüsen 9 befinden. Die Düsen 9 sind links und rechts der Kette genau über den Schmierstellen 49 auf einen Kettenbolzen 52 ausgerichtet. Eine zusätzliche Kettenführung 53 unterstützt das genaue Ausrichten der Kette 4 unter den Düsen 9, wie sich auch die Ölverteilerrohre 9 mittels eines Schutzbleches 54 einkapseln lassen.

Jede Pumpe 8 besitzt sowohl in der Ansaugleitung 55 wie auch in der Hochdruckleitung 56 ein federbelastetes Rückschlagventil 57 bzw. 58. Die Ansaugleitungen 55 erhalten über Vorlaufleitungen 59 Öl von einem Ölverteiler 62. Die komplette Schmiervorrichtung 1, insbesondere deren mechanisch beanspruchten Teile sind zusammen mit dem Ölverteiler 62 in einem mit Öl gefüllten Gehäuse 63 untergebracht.

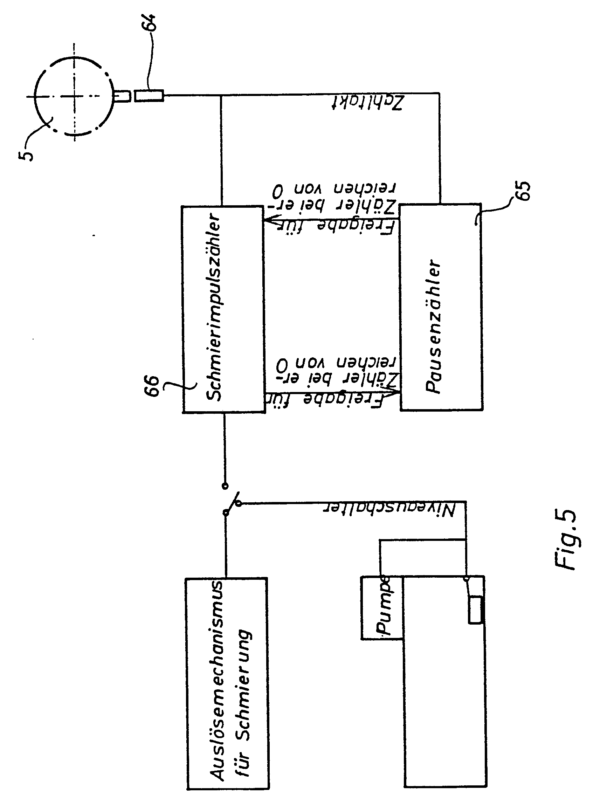

Beim automatischen Betrieb der Kettenschmierung gem. Fig. 5 fragt ein Sensor 64 die über das Kettenrad 5 laufenden Schmierstellen 49 ab, die während der Schmierpausen an das Pausenzählwerk 65 als Zählimpulse weitergeleitet werden. Nach dem Herunterzählen der in das Pausenzählwerk 65 eingegebenen Schmierstellenanzahl bis auf Null, gibt das Pausenzählwerk 65 die Impulse für ein Schmierzählwerk 66 frei und setzt gleichzeitig die Betätigungsvorrichtung 3 in Betrieb.

Die Betätigungsvorrichtung 3 verbindet die Kupplungswelle 17 mit dem Wellenzapfen 13 des Winkelgetriebes 12, worauf sich unverzüglich das von dem Antriebskettenrad 5 abgenommene Drehmoment auf die Kupplungswelle 17 überträgt und diese zusammen mit der Nockenträgerführungshülse 19 und den Ansteuernocken 23 mit gleicher Geschwindigkeit wie die Kette rotiert. Im Verlaufe des Drehens treffen die Ansteuernocken 23 nacheinander auf die Umlenknocken 37, die in ihrer Ausgangslage mit einem Bund 67 am Führungsring 39 anliegen und somit folglich alle aus der gleichen Position heraus den Arbeitstakt aufnehmen, in die sie eine Rückholfeder 68 nach Ablauf des Spritzhubes auch wieder zurückstellt.

Die Breite und Schräge des Umlenknockens 37 legt den Spritzbeginn und das Spritzende genau fest, wobei der Ansteuernocken 23 während des Ablaufens auf der Anlaufschräge 42 den Pumpenkolben 43 nach rechts in Richtung auf den Pumpenkopf 44 zubewegt und dabei das Schmieröl aus dem Druckraum 45 bis zu den Düsen 9 fördert. Sofort nach dem Arbeitstakt des Pumpenkolbens 43 schließt das Rückschlagventil 58 die Hochdruckseite 56 ab und verhindert ein Nachströmen des Schmieröles. Die Rückholfeder 68 stellt den Umlenknocken 37 in seine Ausgangslage zurück, und durch den entstehenden Unterdruck öffnet das Rückschlagventil 57 der Ansaugleitung 55, so daß sich gleichzeitig der Druckraum 45 über die Vorlaufleitung 59 aus dem Ölverteiler 62 auffüllen kann.

Die Kette wird mittels der Nockenansteuerung solange geschmiert, bis das Schmierzählwerk 66 die Zahl Null erreicht hat. Daraufhin trennt die Betätigungsvorrichtung 3 den Auslösemechanismus für die Kettenschmierung, d.h. die Betätigungsvorrichtung 3 wird beaufschlagt und trennt die Kupplungswelle mittels des in die Ausnehmung 35 der Mitnehmerhülse 34 eingerasteten Mitnehmerbügels 36 von dem Wellenzapfen 13, so daß sich die Schmiervorrichtung in Ruhe befindet. Bei außer Betrieb gesetztem Auslösemechanismus (vgl. Fig. 5) fördert auch der Hydraulikmotor bzw. die Hydropumpe 6 kein Schmieröl mehr. Der Schmierzyklus setzt erst dann wieder ein, wenn das Pausenzählwerk 65 bis auf Null heruntergezählt worden ist und danach den Impuls erneut für das Schmierzählwerk 66 freigibt.

## Patentansprüche

1. Vorrichtung zum schußweisen Aufbringen von flüssigem Schmiermittel auf eine über ein Antriebsrad (5) geführte, schnellaufende Kette (4) mit zumindest einer gegen die Kette gerichteten Schmiermittel-Austrittsdüse (9), der mittels zumindest einer nockenbetätigten Schmiermittelkolbenpumpe (8) Schmiermittel zugeführt wird, wobei jeder Schmiermittel-Abgabestelle (49) je eine feststehende Schmiermittelkolbenpumpe (8) zugeordnet ist, mit einem oder mehreren Ansteuernocken (23), die von einer gemeinsamen, axial beweglichen und mit einer Antriebswelle (13) kuppelbaren Kupplungswelle (17) getragen werden, und einem Sensor (64), der ein das Kuppeln der Wellen (13, 17) und Schmieren der Kette (4) bewirkendes Signal abgibt, dadurch gekennzeichnet, daß die Antriebswelle (13) über das vom Ketten-Antriebsrad (5) abgenommene Drehmoment angetrieben und zwangssynchronisiert ist, daß alle Schmiermittelkolbenpumpen (8) um die Antriebswelle (13) herum und in einer Radialebene angeordnet sind, in der auch die Ansteuernocken (23) auf dem Umfang der Antriebswelle (13) positioniert sind, daß jede Schmiermittelkolbenpumpe (8) ein federbelastetes Rückschlagventil (57, 58) in der Ansaug- und Hochdruckleitung (55, 56) aufweist, das in der Ansaugleitung gegen einen Vordruck in dieser Leitung schließt, sowie mit einem eine den Spritzbeginn und das Spritzende an der Schmiermittel- Abgabestelle (49) festlegenden Anlaufschräge (42) aufweisenden Umlenknocken (37) versehen ist, dem wenigstens einer der mit derselben Geschwindigkeit wie die Kettengeschwindigkeit rotierender Ansteuernocken (23) der über die Antriebswelle (13) mit dem Kettenrad (5) der Kette (4) gekuppelten Kupplungswelle (17) im Verlaufe des Drehens gegenüberliegt, daß der dem antreibenden Kettenrad (5) zugeordnete Sensor (64) die Anzahl der über das Kettenrad (5) laufenden Schmiermittel-Abgabestellen (49) feststellt und diese als Zählimpulse an ein die Anzahl der Schmiermittel-Abgabestellen enthaltenes Schmier- bzw. Pausenzählwerk (66 bzw. 65) weiterleitet, das nach dem Herunterzählen der eingegebenen Anzahl Schmiermittel-Abgabestellen bis auf Null die Impulse für das Schmierzählwerk (66) freigibt und gleichzeitig das Ankuppeln der Wellen (13, 17) veranlaßt, und daß das Schmierzählwerk (66) nach dem Herunterzählen der eingegebenen Anzahl Schmiermittel-Abgabestellen bis auf Null das Entkuppeln der Wellen (13, 17) veranlaßt.

2. Vorrichtung nach Anspruch 1, gekennzeichnet durch zehn auf einem Halbkreis mit Abstand nebeneinanderliegend angeordnete Schmiermittelkolbenpumpen (8) mit je einem eine Anlaufschräge (42) aufweisenden Umlenknocken (37) sowie zwei mit derselben Geschwindigkeit wie die Kettengeschwindigkeit rotierende und auf der Kupplungswelle (17) derart befestigte Ansteuernocken (23), daß im Verlaufe des Drehens jeweils der eine Ansteuernocken (23a) dem Umlenknocken (37a) der ersten und der andere Ansteuernocken (23b) dem Umlenknocken (37b) der letzten Schmiermittelkolbenpumpe (8) gegenüberliegt.

3. Vorrichtung nach Anspruch 1 oder 2, gekennzeichnet durch ein mit dem Kettenrad (5) verbundenes Winkelgetriebe (12), das ausgangsseitig die als Wellenzapfen ausgebildete Antriebswelle (13) trägt, die eine aufgekeilte Kupplungshälfte (14) einer zweiteiligen Klauenkupplung (16) besitzt, die in die andere, fest mit der Kupplungswelle (17) verbundene ausrückbare zweite Kupplungshälfte (15) eingreift.

4. Vorrichtung nach einem oder mehreren der Ansprüche 1 bis 3, dadurch gekennzeichnet, daß eine auf die Kupplungswelle (17) aufgekeilte Führungshülse (19) die Ansteuernocken (23) aufnimmt.

5. Vorrichtung nach einem oder mehreren der Ansprüche 1 bis 4, gekennzeichnet durch verstellbare Ansteuernocken (23).

6. Vorrichtung nach einem oder mehreren der Ansprüche 1 bis 5, gekennzeichnet durch ein die Kupplungswelle (17) mit der Führungshülse (19) aufnehmendes Lager (24), das zwischen einem Lagerflansch (25) angeordnet ist, der über eine Zentrierplatte (26), Abstandshaltern (27, 28), einer Pumpenträgerscheibe (29) und einer Grundplatte (32) fest mit dem Winkelgetriebe (12) verbunden ist.

7. Vorrichtung nach einem oder mehreren der Ansprüche 1 bis 6, gekennzeichnet durch einen Führungsring (39) für die/den Umlenknocken (37).

8. Vorrichtung nach einem oder mehreren der Ansprüche 1 bis 7, gekennzeichnet durch eine an dem der Klauenkupplung (16) entgegengesetzten Ende der Kupplungswelle (17) angeordnete Mitnehmerhülse (34) mit einer Ausnehmung (35), in die ein Mitnehmerbügel (36) einer Betätigungsvorrichtung (3) eingreift.

9. Vorrichtung nach einem oder mehreren der Ansprüche 1 bis 8, gekennzeichnet durch eine Rückholfeder (68) für den Pumpenkolben (43) einer Schmierpumpe (8).

10. Vorrichtung nach einem oder mehreren der Ansprüche 1 bis 9, gekennzeichnet durch von einem Pumpenkopf (44) der einzelnen Schmiermittelkolbenpumpen (8) bis zu einem horizontalen Düsenhalter (47) oberhalb der Kette (4) verlaufende Rohrleitungen (46), die in einer Reihe mit Abstand voneinander in dem Düsenhalter (47) angeordnet sind und darunter in je ein Ölverteilerrohr (48) mit halbiertem Rohrleitungsquerschnitt und je einer Ölauftragsdüse (9) links und rechts der Kette (4) übergehen.

11. Vorrichtung nach einem oder mehreren der Ansprüche 1 bis 10, gekennzeichnet durch Kettenführungen (53) im Bereich der Ölauftragsdüsen (9).

2. Vorrichtung nach einem oder mehreren der Ansprüche 1 bis 11, gekennzeichnet durch ein mit Öl gefülltes Gehäuse (63).

## Claims

1. A device for applying a liquid lubricant in shots to a quickly moving chain (4) guided over a drive gear (5), having at least one lubricant outlet nozzle (9) directed towards the chain, which is supplied with lubricant by at least one cam-actuated lubricant piston pump (8), each lubricant discharge point (49) being associated with a respective stationary lubricant piston pump (8) having one or more control cams (23) which are carried by a common axially movable coupling shaft (17) which can be coupled with a drive shaft (13), and having a sensor (64) which gives a signal effecting coupling of the shafts (13, 17) and lubrication of the chain (4), characterized in that the drive shaft (13) is driven and force-synchronised by the torque taken from the chain driving gear (5), in that all the lubricant piston pumps (8) are arranged around the drive shaft (13) in a radial plane in which the control cams (23) are also positioned on the periphery of the drive shaft (13); in that each lubricant piston pump (8) has a respective spring-loaded non-return valve (57, 58) in the suction and highpressure lines (55, 56) which in the suction line closes against a feed pressure in this line, and is provided with a reversing cam follower (37) having a sloping camming surface (42) that determined the beginning and the end of injection at the lubricant discharge point (49), opposite which at least one of the control cams (23) (rotating at the same speed as the speed of the chain) of the coupling shaft (17) that is coupled by way of the drive shaft (13) to the chain wheel (5) of the chain (4), comes in the course of the rotation; in that the sensor (64) associated with the driven chain wheel (5) determines the number of lubricant discharge points (49) running over the chain wheel (5) and transmits this number as metering pulses to a lubrication or interval counting mechanism (66 or 65 respectively) holding the number of lubricant discharge points, which, after the given number of lubricant discharge points had been counted down to zero, releases the pulse for the lubrication counter (66) and at the same time effects coupling of the shafts (13, 17), and that the lubrication counter (66) effects decoupling of the shafts (13, 17) after the given number of lubricant discharge point had been counted down to zero.

2. A device according to claim 1, characterized by ten lubricant piston pumps (8) spaced alongside one another on a semi-circle, each with a respective reversing cam follower (37) having a sloping camming surface (42), and two control cams (23) rotating at the same speed as the chain and attached to the coupling shaft (17) so that in the course of the rotation one control cam (23a) is opposite the reversing cam follower (37a) of the first lubricant piston pump (8) when the other control cam (23b) is opposite the reversing cam follower (37b) of the last lubricant piston pump (8).

3. A device according to claim 1 or claim 2, characterised by a bevel gear (12) connected to the chain wheel (5) and carrying on the output side the drive shaft (13) which is formed as a shaft journal and has keyed to it one half (14) of a two-part claw coupling (16) which engages in the other disengageable second half coupling (15) that is securely connected to the coupling shaft (17).

4. A device according to any one or more of claims 1 to 3, characterised in that a guide sleeve (19) keyed to the coupling shaft (17) accommodates the control cam (23).

5. A device according to any one or more of claims 1 to 4, characterised by adjustable control cams (23).

6. A device according to any one or more of claims 1 to 5, characterised by a bearing (24) accommodating the coupling shaft (17) with the guide sleeve (19) which is arranged between a bearing flange (25) which is securely connected to the bevel gear (12) by a centering plate (26), a spacer (27, 28), a pump carrier plate (29) and a base plate (32).

7. A device according to any one or more of claims 1 to 6, characterised by a guide ring (39) for the reversing cam follower(s) (37).

8. A device according to any one or more of claims 1 to 7, characterised by a carrier sleeve (34) arranged on the end of the coupling shaft (17) opposite the claw coupling (16) and having a recess (35) in which a carrier bracket (36) of an operating device (3) engages.

9. A device according to any one or more of claims 1 to 8, characterised by a return spring (68) for the pump piston (43) of a lubricating pump (8).

10. A device according to any one or more of claims 1 to 9, characterised by pipe lines (46) each extending from a pump head (44) of the individual lubricant piston pumps (8) to a horizontal nozzle holder (47) above the chain (4) and arranged in a row spaced apart in the nozzle holder (47) and merging thereunder into respective oil distributing pipes (48) having a cross-section half that of the pipe line and having respective application nozzles (9) to the left and to the right of the chain (4).

11. A device according to any one or more of claims 1 to 10, characterised by chain guides (53) in the region of the oil application nozzles (9).

12. A device according to any one or more of claims 1 to 11, characterised by a housing (63) filled with oil.

## Revendications

1. Dispositif pour l'application discontinue d'un lubrifiant liquide sur une chaîne (4) guidée et entraînée rapidement par une roue motrice (5), qui comprend au moins une buse (9) de sortie du lubrifiant dirigée vers la chaîne et a laquelle le lubrifiant est amené par au moins une pompe piston (8) pour lubrifiant commandée par des cames et qui, pour chaque point d'amenée (49) du lubrifiant comporte une pompe à piston fixe (8) pour lubrifiant associée à une ou plusieurs cames de commande (23) portées par un arbre d'embrayage commun (17) qui peut se déplacer dans le sens axial et être accouplé à un arbre moteur (13) et un organe sensible (64) qui émet un signal provoquant l'accouplement des arbres (13, 17) et la lubrification de la chaîne (4), caractérisé en ce que l'arbre moteur (13) est entraîné et obligatoirement synchronisé par l'intermédiaire du moment de rotation provenant de la roue motrice (5) de la chaîne, en ce que toutes les pompes à piston (8) pour lubrifiant sont disposées autour de l'arbre moteur (13) et dans un plan radial dans lequel les cames de commande (23) sont également disposées à la périphérie de l'arbre moteur (13), en ce que chaque pompe à piston (8) pour lubrifiant est associée dans la canalisation d'aspiration et de compression (55, 56) à une soupape d'arrêt (57, 58) soumise à l'action d'un ressort qui est monté dans la canalisation d'aspiration, se ferme en cas de pression dans cette canalisation et comporte une came de renvoi (37) qui comprend une surface d'accostage oblique (42) déterminant le début et la fin de l'émission de lubrifiant au point de projection (49) et à laquelle fait face, au cours de la rotation, en tournant à la même vitesse que la chaîne, l'une des cames de commande (23) de l'arbre d'embrayage (17) accouplé, par l'intermédiaire de l'arbre moteur (13), à la roue motrice (5) de la chaîne (4), en ce que l'organe sensible (64) associé à la roue motrice (5) qui entraîne la chaîne détermine le nombre des points d'émission (49) du lubrifiant qui passent sur la roue motrice (5) et le transmet, sous la forme d'impulsions de comptage, un dispositif de comptage (66 ou 65) des opérations de lubrification ou des intervalles correspondant au nombre des points d'application du lubrifiant et qui, après comptage jusqu'à zéro du nombre de points d'application du lubrifiant, libère les impulsions pour le dispositif de comptage (66) du lubrifiant et, en même temps, provoque l'accouplement des arbres (13, 17) et en ce qu'après le comptage jusqu'à zéro du nombre des points d'application du lubrifiant le dispositif de comptage (66) du lubrifiant provoque le désaccouplement des arbres (13, 17).

2. Dispositif selon la revendication 1, caractérisé par dix pompes à piston (8) pour lubrifiant qui sont placées à une certaine distance les unes des autres sur une demi-circonférence et sont associées chacune à une came de renvoi (37) comportant une surface d'accostage oblique (42) ainsi qu'à deux cames de commande (23) qui tournent à la même vitesse que la chaîne et sont fixées sur l'arbre d'accouplement (17) de telle manière qu'à cours de la rotation l'une des cames (23a) se trouve en face de la came de renvoi (37a) de la première pompe à piston (8) pour lubrifiant et que l'autre came de commande (23b) se trouve en face de la came de renvoi (37b) de la dernière pompe à piston pour lubrifiant.

3. Dispositif selon l'une des revendications 1 ou 2, caractérisé par un engrenage d'angle (12) qui est relié à la roue à chaîne (5) et qui, du côté de la sortie, porte le tourillon de l'arbre moteur (13) qui comporte une moitié d'accouplement (14) clavetée d'une accouplement à griffes (16) en deux parties qui est en prise avec l'autre moitié d'accouplement amovible (15) solidaire de l'arbre d'accouplement (17).

4. Dispositif selon l'une ou plusieurs des revendications 1 à 3, caractérisé en ce qu'une enveloppe de guidage (19) clavetée sur l'arbre d'accouplement (17) contient les cames de commande (23).

5. Dispositif selon une ou plusieurs des revendications 1 à 4, caractérisé par des cames de commande réglables (23).

6. Dispositif selon une ou plusieurs des revendications 1 à 5, caractérisé par un palier (24) qui reçoit l'arbre d'accouplement (17) avec l'enveloppe de guidage (19) et qui est monté dans une bride (25) qui est reliée, par l'intermédiaire d'une plaque de centrage (26), du dispositif de maintien à distance (27, 28), d'un disque support de pompe (29) et d'une plaque de base (32), à l'engrenage d'angle (12).

7. Dispositif selon une ou plusieurs des revendications 1 à 6, caractérisé par une bague de guidage (39) pour la ou les cames de renvoi (37).

8. Dispositif selon une ou plusieurs des revendications 1 à 7, caractérisé par une enveloppe d'entraînement (34) qui est montée à l'extrémité de l'arbre d'accouplement (17) et comporte un évidement (35) dans lequel s'engage un étrier d'entraînement (36) d'un dispositif de mise en action (3).

9. Dispositif selon une ou plusieurs des revendications 1 à 7, caractérisé par un ressort de rappel (68) pour le piston (43) de chaque pompe (8) à lubrifiant.

10. Dispositif selon une ou plusieurs des revendications 1 à 9, caractérisé par des canalisations tubulaires (46) qui au-dessus de la chaîne (4) relient les têtes de pompe (44) des différentes pompes à piston (8) à un support de buses horizontal (47) et qui sont montées en ligne à une certaine distance les unes des autres dans le support de buses (47) et aboutissent, en-dessous, à des tubes (48) de distribution de l'huile ayant une section semi-circulaire et à des buses (9) assurant l'amenée de l'huile à gauche et à droite de la chaîne (4).

11. Dispositif selon une ou plusieurs des revendications 1 à 10, caractérisé par des dispositifs de guidage (53) de la chaîne dans les zones de buses (9) d'amenée de l'huile.

12. Dispositif selon une ou plusieurs des revendications 1 à 11, caractérisé par une enveloppe (63) remplie d'huile.

Fig.1

EP 0 142 687 B1

Fig.2

EP 0 142 687 B1

Fig. 3

EP 0 142 687 B1

Fig.4

Auslösemechanismus
für Schmierung

Pumpe

Niveauschalter

66

Schmierimpulszähler

Freigabe für
Zähler bei erreichen von 0

Freigabe für
Zähler bei erreichen von 0

Zähltakt

Pausenzähler

65

5

64

**Fig.5**